# EUROPEAN PATENT APPLICATION

(11) **EP 4 061 039 A1**
(43) Date of publication of application: **21.09.2022**
(21) Application number: 21162849.0
(22) Date of filing: 16.03.2021
(51) Int. Cl.: H04W 12/04, H04W 12/069, H04W 12/71, H04W 12/69, H04W 12/37, H04W 12/30, H04W 12/037

(54) **A METHOD FOR CONFIGURING A PROFILE ASSOCIATED WITH A USER DEVICE IN AN INDUSTRIAL FACILITY**

(71) Applicant: Siemens Aktiengesellschaft, 80333 München (DE)
(72) Inventor: Fiorentino, Vincenzo, 90491 Nürnberg (DE); Walewski, Joachim, 82008 Unterhaching (DE)

(57) **Abstract**

The current disclosure describes a method for configuring a profile associated with a user device in an industrial facility. The method comprises transmitting a registration request to a registration entity for connecting to a first wireless network, receiving a network identifier and at least one network key from the registration entity, creating a network session with a central authentication server for authenticating the industrial application with the central authentication server, and transmitting an application registration request associated with the at least one industrial application to the central authentication server.

Upon successful registration of the industrial application, the central authentication server transmits a profile associated the user device and the industrial application to a network management device. Accordingly, the current disclosure describes a method for automatic onboarding of user devices. Based on the above described method, the network access of the industrial application is configured automatically without human intervention.

## Description

The current invention relates to industrial communication and, more particularly, relates to onboarding of industrial applications on user devices. The onboarding of wireless devices in an industrial network is often done manually. Often, the user device to be deployed is manually connected to an Industrial PC via a cable for configuration and then the user device is allowed to be on-boarded to the industrial wireless network. This is particularly effort intensive and is subject to human error.

Moreover, when an existing user device is to be replaced, the entire process needs to be repeated. Accordingly, devices cannot be swapped out quickly. Therefore, device replacement often involves some downtime. With the increasing adoption of 5G wireless technology in industrial automation, the number of wireless devices is expected to increase drastically. Accordingly, manual configuration and onboarding of wireless devices can become time-intensive. Any industrial application on an onboarded user device may consume the communication service for which the user device has a subscription. Also, on a configured user device, a plurality of industrial applications may be present. This can lead to communication bottle necks when non-mission-critical industrial applications consume more network resources than mission-critical industrial applications. Therefore, there is a need of having a simple, secure, and automatic mechanism for the on-boarding of wireless devices in industrial automation and the tailoring of the network connectivity to the industrial applications' needs.

Accordingly, the current disclosure describes a method according to claim 1, a user device accordingly to claim 7, and non-transitory storage medium according to claim 8 which addresses the above-mentioned aspects.

Accordingly, the current disclosure describes a method for configuring a profile associated with a user device in an industrial facility. The user device is connectable to one or more wireless networks. The user device comprises at least one industrial application capable of processing industrial data associated with at least one process in the industrial facility. The user device includes a device identifier associated with the user device. Similarly, at least one industrial application includes an application identifier associated with the at least one industrial application.

The method, by the user device, comprises transmitting a registration request to a registration entity for connecting to a first wireless network, receiving a network identifier and at least one network key from the registration entity, creating a network session with a central authentication server for authenticating the industrial application with the central authentication server, based on the at least one network key, and transmitting an application registration request associated with the at least one industrial application to the central authentication server during the created network session. Upon successful registration of the industrial application, the central authentication server transmits a profile associated with at least one of the user device and the industrial application to a network management device. The profile includes one or more network parameters associated with a connection of least one of the user device and the industrial application, to the first wireless network. Accordingly, the current disclosure describes a method for automatic onboarding of user devices. Based on the above described method, the network access of the industrial application is configured automatically without any human intervention. Accordingly, this allows for automated regulation of network access in relation to industrial applications while ensuring that mission critical applications have sufficient access to network resources. Additionally, since the onboarding is performed in relation to the industrial application and not the device, this allows for easy replacement of user devices. When a particular user device is to be replaced, an instance of the onboarded industrial application with the same application identifier may be started on the replacement user device and accordingly the onboarding process need not be repeated.

In an example, the registration request includes the device identifier associated with the user device for verifying the registration request and wherein the application registration request includes the application identifier associated with the at least one industrial application. In another example, the registration entity is one of a network management device associated with the first wireless network and the central authentication server.

In an example, the registration request is transmitted to the registration entity over a control plane associated with the first wireless network and wherein the application registration request is transmitted to the central authentication server over a data plane associated with the first wireless network. Accordingly, till the user device is authenticated by the registration entity, the user device does not have any other access to the data plane. In an example, registration entity includes a first set of one or more device identifiers used for verifying the registration request from the user device.

In an example, the registration entity is the central authentication server and the method further includes registering with the network management device using the received at least network key, subsequent to receiving the network identifier and at least one network key from the registration entity.

In another aspect, the current disclosure describes a user device connectable to one or more wireless networks. The user device comprises at least one industrial application capable of processing industrial data associated with at least one process in the industrial facility. The user device includes a device identifier associated with the user device and the at least one industrial application includes an application identifier associated with the at least one industrial application. The user device comprises a network interface for transmitting and receiving data to/from one or more devices of the one or more wireless networks, and one or more processors connected to a memory module (also referred to as non-transitory storage medium). The one or more processors are configured to transmit a registration request to a registration entity for connecting to a first wireless network, receive a network identifier and at least one network key from the registration entity, create a network session with a central authentication server for authenticating the industrial application with the central authentication server, based on the at least one network key, and transmit an application registration request associated with the at least one industrial application to the central authentication server during the created network session. Upon successful registration of the industrial application, the central authentication server transmits a profile associated with at least one of the user device and the industrial application to a network management device, wherein the network profile includes one or more network class parameters associated with a connection of least one of the user device and the industrial application, to the first wireless network.

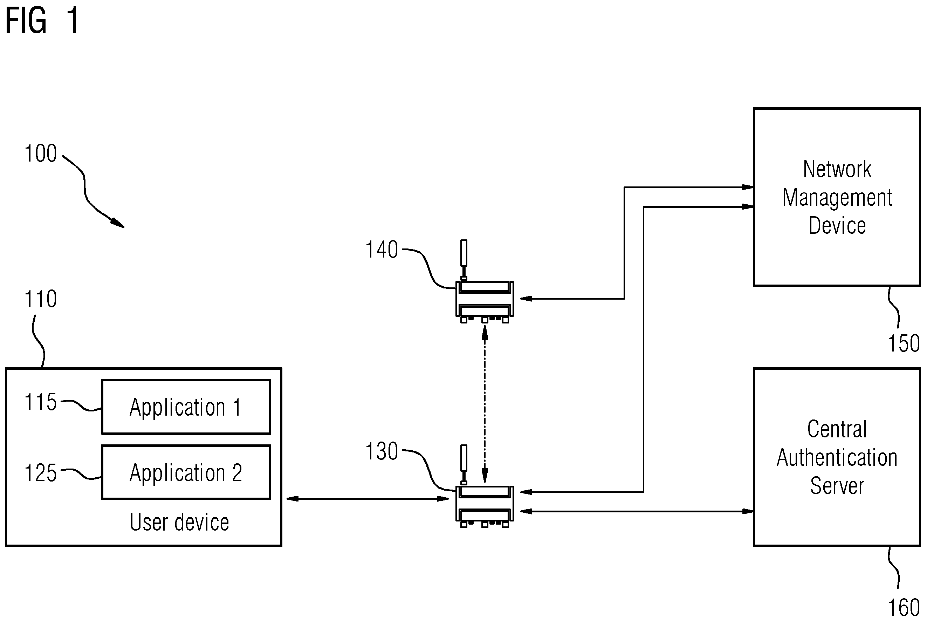

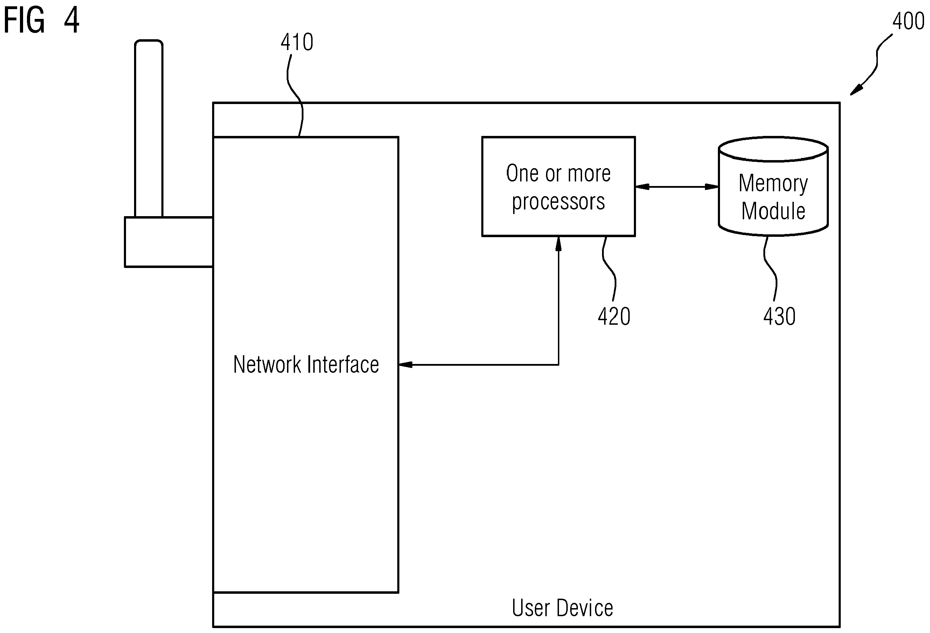

In yet another aspect, the current disclosure describes a non-transitory storage medium for configuring a profile associated with a user device in an industrial facility user device connectable to one or more wireless networks, the user device comprising at least one industrial application capable of processing industrial data associated with at least one process in the industrial facility, wherein the user device includes a device identifier associated with the user device and wherein the at least one industrial application includes an application identifier associated with the at least one industrial application. The non-transitory storage medium comprises a plurality of instructions, which when executed on one or more processors, cause the one or more processors to transmit a registration request to a registration entity for connecting to a first wireless network, receive a network identifier and at least one network key from the registration entity, create a network session with a central authentication server for authenticating the industrial application with the central authentication server, based on the at least one network key and transmit an application registration request associated with the at least one industrial application to the central authentication server during the created network session. Upon successful registration of the industrial application, the central authentication server transmits a profile associated with at least one of the user devices and the related industrial application to a network management device, wherein the network profile includes one or more network class parameters associated with a connection of least one of the user device and the industrial application, to the first wireless network. The advantages of the method apply to the device and the non-transitory storage medium described herein. These aspects are further described in relation figures 1-4.

The following detailed description references the drawings, wherein:
Figure 1 illustrates an example industrial facility with a user device to be onboarded;
Figure 2 illustrates an example method for configuring a profile associated with a user device in an industrial facility;
Figure 3 is an interaction diagram illustrating the interactions between the user device, the network management device, and the central authentication server; and
Figure 4 illustrates an example user device capable of being onboarded in accordance with the above-mentioned example method.

Figure 1 illustrates a section 100 of an industrial facility comprising a user device 110. Industrial facility herein refers to any environment where one or more industrial processes such as manufacturing, refining, smelting, or assembly of equipment may take place. This includes process plants, oil refineries, automobile factories, etc. The industrial facility includes a plurality of industrial devices including control devices, field devices, mobile devices, operator stations, etc. The control devices include process controllers, programmable logic controllers, supervisory controllers, automated guided vehicles, robots, operator devices, etc. One or more control devices are connected to a plurality of field devices (not shown in figure) such as actuators and sensor devices for monitoring and controlling industrial processes in the industrial facility. These field devices can include flowmeters, value actuators, temperature sensors, pressure sensors, etc.

Additionally, the industrial facility includes a plurality of mobile devices including one or more robots for performing a plurality of operations such as welding, assembly of parts; one or more autonomous guided vehicles for transportation and handling of material; one or more assets with RFID tags on conveyor belts, etc. in the industrial facility. Additionally, the industrial facility may include an operator station for displaying the status of the industrial facility to an operator and for allowing the operator to define KPIs for the control of the industrial processes in the facility. All the industrial devices may be connected to each other via a plant network (realized via wired and wireless technologies).

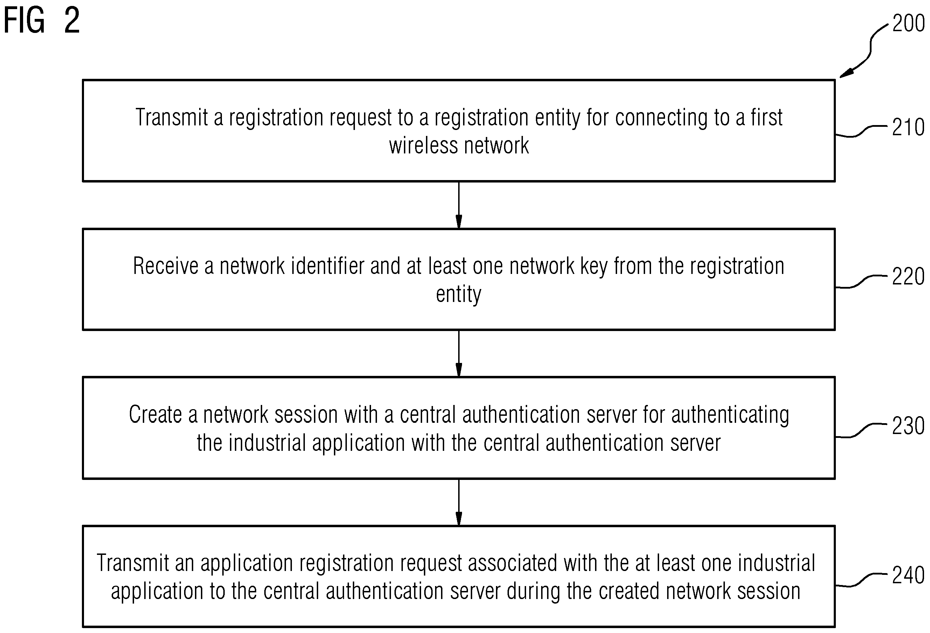

Communication in the above-mentioned plant network happens through wired and wireless means or technologies. Accordingly, the industrial facility includes a plurality of gateway devices (shown in the figure as a first gateway device 130 and a second gateway device 140). Gateway devices herein refers to one or more network devices capable of connecting the user devices to the wireless network. Examples of gateway devices include base stations, routers, switches, relays, access points, etc. The plurality of gateway devices may include stationary gateway devices which may be affixed to a plurality of locations in the industrial facility, and mobile gateway devices which are capable of moving about the sections to provide appropriate network connectivity. A plurality of the user devices in the facility are connected to one or more industrial gateway devices to connect to the wireless network and for communicating information with the other devices and systems in the industrial facility. User device herein refers to an industrial device which is capable of connecting to a wireless network via the gateway devices. The user devices include one or more industrial applications which are capable of processing data from other industrial devices. When a new user device is installed in the industrial facility, the user device needs to be onboarded onto the wireless network to connect and communicate with the other industrial devices. Onboarding is also referred to as registration of the user device/industrial application. Onboarding or registration of industrial application herein refers to authentication of the industrial application and a configuration of a profile (also referred to as network profile or application network profile) for the industrial application on the user device to allow the industrial application to utilize the network resources of the wireless network. This is done by the network management device 150 (also referred to as a network management server 150) and the central authentication server 160. The onboarding by the network management device 150 and the central authentication server 160is explained in the description of figure 2.

Figure 2 illustrates a method 200 for configuring a profile associated with a user device 110 in an industrial facility. The user device 110 is connectable to one or more wireless networks. The user device 110 comprises at least one industrial application 115 capable of processing industrial data associated with at least one process in the industrial facility. The user device 110 includes a device identifier associated with the user device 110. Similarly, at least one industrial application 115 includes an application identifier associated with the at least one industrial application 115.

The method 200 is implemented by the user device 110. At step 210, the user device 110 transmits a registration request to a registration entity for connecting to a first wireless network. The registration entity herein refers to a network device which is responsible for providing the user device 110 (which has not yet been onboarded) with provisional network access to a central authentication server 160. In an example, the registration entity is a network management device 150. The network management device 150 contains a list of device identifiers associated with the devices in the industrial facility. The list of device identifiers (also referred to as authorized device identifiers) is provided to the network management device 150 during the commissioning of the wireless network or the industrial facility. The list of the device identifiers is associated with devices which are present or likely to be present in the industrial facility. In an example, the list of device identifiers is generated during the engineering and commissioning of the industrial facility. The registration request from the user device 110 includes the device identifier associated with the user device 110. Accordingly, upon receiving the registration request from the user device 110, the registration entity checks the device identifier against the list of authorized device identifiers to evaluate if the user device 110 is allowed to access the central authentication server 160. In an example, the device identifier is a permanent equipment identifier (PEI). In an example, the device identifier is the media access control (MAC) address.

Then, at step 220, the user device 110 receives a network identifier and at least one network key from the registration entity. As mentioned previously, based on the registration request, the registration entity determines if the user device 110 is allowed access to the central authentication server 160. Then, when the device identifier of the user device 110 is from the list of device identifiers, the registration entity transmits the network identifier and at least one network key to the user device 110. The network key is for creating a network session with the central authentication server 160 for authenticating the at least one industrial application 115 with the central authentication server 160. In an example, the network identifier is an internet protocol (IP) address. In an example, communication in relation to steps 210 and 220 takes place over a control plane of the wireless network.

Then, at step 230, the user device 110, based on the at least one network key, creates a network session with the central authentication server 160 for authenticating the at least one industrial application 115 with the central authentication server 160. In an example, the network session with the central authentication server 160 is created over a data plane associated with the wireless network.

Then, at step 240, the user device 100 transmits an application registration request associated with the at least one industrial application 115 to the central authentication server 160 during the created network session. In an example, the application registration request includes the application identifier associated with the at least one industrial application. Based on the application identifier, the central authentication server 160 verifies the at least one industrial application 115.

Upon authentication of the at least one industrial application 115, the central authentication server 160 transmits a profile associated with the industrial application 115 to the network management device 150. The profile includes one or more network parameters (for example quality-of-service related parameters) associated with the industrial application 115. Examples of network parameters could also include a priority parameter, packet delay budget threshold, packet error rate threshold, default averaging window, etc.

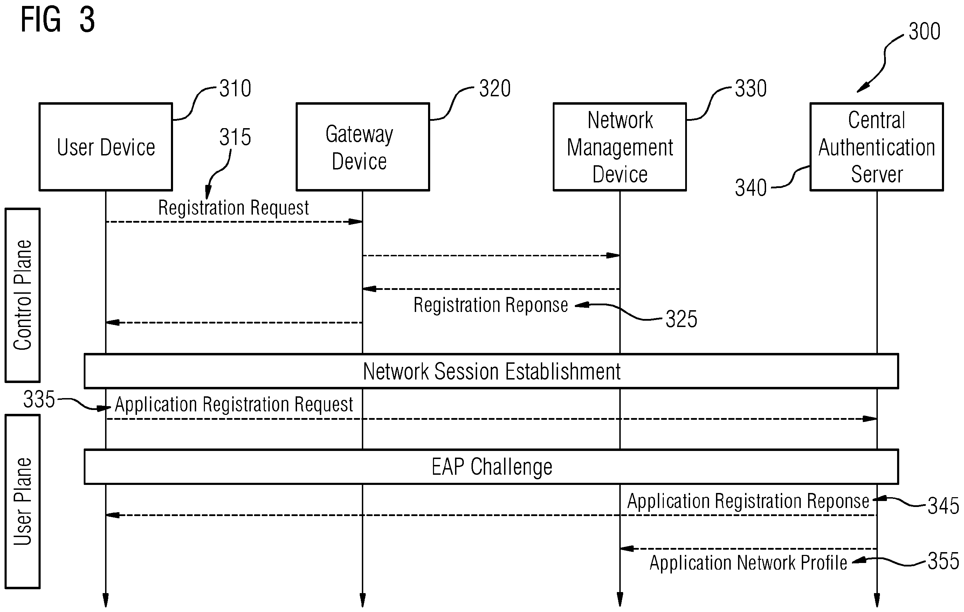

Accordingly, based on the received profile from the central authentication server 160, the network management device 150 configures the gateway devices (for example gateways 130 and 140) in the wireless network to ensure that the network connection associated with the at least one industrial application 115 on the user device 110 is in line with the network parameters of the profile from the central authentication server 160. Accordingly, the network resources available to the at least one industrial application is regulated based on the profile from the central authentication server 160 and thus the user device 110 along with the at least one industrial application 115 is onboarded. Additionally, since the networks resources available to an industrial application is regulated by the profile, the network management device 150 can accordingly ensure that mission critical industrial applications have access to sufficient network resources when there may be other resource-greedy non-mission-critical industrial applications. While the method 200 is explained above, it is further illustrated below in relation to figure 3 with additional example steps.

Figure 3 illustrates interaction diagram 300 illustrating the interactions between the user device 310, network management device 330 and central authentication server 340 in accordance with the method 200 described above. In an example, the user device 310 communicates with the network management device 330 and the central authentication server 340 via a gateway device 320. Accordingly, all the communication from and to the user device 310 is via the gateway device 320.

Additionally, as mentioned above, the user device 310 includes at least one industrial application (not shown in the figure). Similarly, in an example, the network management device 330 includes one or more core network functions. For example, in relation to a 5G network, the one or more core network functions include authentication server function (AUF), unified data management function (UDM), Application function (AF), and user plane function (UPF). The core network functions could also be associated with other wireless networks (besides 5G).

Initially, the user device 310 has not been onboarded on to the wireless network associated with the gateway device 320, and the network management device 330. Accordingly, the user device 310 connects to the gateway device 320 and transmits a registration request 315 to gateway device 310 to connect to the wireless network. The registration request 315 is then forwarded to the registration entity. In the example the registration entity is the network management device 330. Accordingly, the registration request 315 is transmitted to the network management device 330. In an example, the registration request 315 includes the device identifier associated with the user device 310. The device identifier is encrypted using a key associated with the user device 310. Upon receiving the registration request 315, the network management device 330 decrypts the device identifier in the registration request 315 and compares the device identifier to the list of device identifiers present with it. In an example, prior to the transmission of the registration request from the user device 310, an exchange of public keys is performed between the user device 310 and the network management device 330. On a successful verification, the network management device 330 transmits a registration response 325 including a network identifier and a network access key to the user device 310. In an example, where the registration entity is the central management server 340, subsequent to receiving a network key from the central authentication server 340, the user device 310 registers with the network management device 330 using the received network key. Accordingly, the network management device 330 updates a list of network devices based on the user device registration.

Then, using the network key (also referred to as network access key), the user device 310 creates a network session with the central authentication server 340. In an example, the network session is a protocol data unit (PDU) session. Then, the user device 310 sends an application registration request 335 to the central authentication server 340. In an example, the application registration request 335 includes an application identifier and a public key associated with the at least one industrial application. In response, the central authentication server 340 sends its public key to the industrial application. Then, the central authentication server 340 initiates a challenge-based authentication. In an example the challenge-based authentication is based on extensible authentical protocol (EAP). Upon successful authentication of the industrial application, the central authentication server acknowledges the same by sending an application registration response to the user device 310 indicative of the successful authentication and registration/ onboarding. Additionally, the central authentication server 340 sends a profile of the industrial application to the network management device 330. The profile of the industrial application comprises a plurality of network parameters indicative of the network resources or quality of service to be allocated to the at least one industrial application. As mentioned previously, examples of network parameters can include a priority parameter, packet delay budget threshold, packet error rate threshold, default averaging window, etc.

In an example, where the registration entity is the central authentication server 340, the network management device 330 acts as a transparent entity between the user device 310 and the central authentication server 340. Accordingly, no processing in relation to the onboarding of the user 310 is performed by the network management device 330 and the above methods are performed primarily by the central authentication server 340.In an example, a profile of the industrial application is predetermined during the engineering of the industrial facility and stored on the central authentication server. In an example, one or more industrial applications are associated with a single profile. For example, measurement and data analytics applications may be assigned a first profile and control applications may be assigned a second profile. An example of the first profile is based on the 5QI value 80 as mentioned in the table 5.7.4-1 'standardized 5QI to quality-of-service characteristics mapping' as provided in ESTI TS 123 501 System architecture for the 5G system (based on 3GPP TS 23.501, version 15.3.0). An example of the second profile is based on the 5QI value 67 as mentioned in the table 5.7.4-1 'standardized 5QI to quality-of-service characteristics mapping' as provided in ESTI TS 123 501 System architecture for the 5G system (based on 3GPP TS 23.501, version 15.3.0).

Accordingly, the current disclosure describes methods of onboarding user devices using the device identifier and a public key. Accordingly, the requirement of subscriber identification module (SIM) or provision of network key (during configuration) is not required. This ensures that the onboarding of the user device does not require substantial effort. Additionally, this allows for quick replacement of user devices since the replacement user device does not need to be configured prior to replacement.

The present disclosure can take a form of a computer program product comprising computer-usable or computer-readable medium storing program code for use by or in connection with one or more computers, processing units, or instruction execution system. For example, the method 200 may be realized in a single device or across one or more devices.

Accordingly, the current disclosure describes a user device 400 connectable to one or more wireless networks, the user device 400 comprising at least one industrial application capable of processing industrial data associated with at least one process in the industrial facility. The user device 400 includes a device identifier associated with the user device 400 and wherein the at least one industrial application includes an application identifier associated with the at least one industrial application. The user device 400 a network interface 410 for transmitting and receiving data to/from one or more devices of the one or more wireless networks and one or more processors 420 connected to a memory module 430 (also referred to as non-transitory storage medium 430). The non-transitory storage medium 430 includes a plurality of constructions which when executed by the one or more processors 420, causes the one or more processors 420 to transmit a registration request to a registration entity for connecting to a first wireless network, receive a network identifier and at least one network key from the registration entity, create a network session with a central authentication server for authenticating the industrial application with the central authentication server based on the at least one network key, and transmit an application registration request associated with the at least one industrial application to the central authentication server during the created network session. Upon successful registration of the industrial application, the central authentication server transmits a profile associated with at least one of the user device and the industrial application to a network management device, wherein the network profile includes one or more network class parameters associated with a connection of at least one of the user device and the industrial application, to the first wireless network.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read-only memory (ROM), a rigid magnetic disk and optical disk such as compact disk read-only memory (CD-ROM), compact-disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) for configuring a profile associated with a user device (110) in an industrial facility, the user device (110) connectable to one or more wireless networks, the user device (110) comprising at least one industrial application (115) capable of processing industrial data associated with at least one process in the industrial facility, wherein the user device (110) includes a device identifier associated with the user device (110) and wherein the at least one industrial application (115)includes an application identifier associated with the at least one industrial application (115), the method (200) comprising:
a. Transmitting (210) a registration request (315) to a registration entity for connecting to a first wireless network;
b. Receiving (220) a network identifier and at least one network key from the registration entity;
c. Creating (230) a network session with a central authentication server (160) for authenticating the industrial application, based on the at least one network key;
d. Transmitting (240) an application registration request (335) associated with the at least one industrial application (115) to the central authentication server (160) during the created network session,
wherein upon successful registration of the at least one industrial application (115), the central authentication server (160) transmits a profile associated with the at least one industrial application (115) to a network management device (150), wherein the network profile includes one or more network parameters associated with the at least one industrial application (115).

2. The method (200) as claimed in claim 1, wherein the registration request (315) includes the device identifier associated with the user device (110) for verifying the registration request (315) and wherein the application registration request (315) includes the application identifier associated with the at least one industrial application (115) .

3. The method (200) as claimed in claim 1 wherein the registration entity is one of a network management device (150) associated with the first wireless network and the central authentication server (160).

4. The method (200) as claimed in claim 1, wherein the registration request (315) is transmitted to the registration entity over a control plane associated with the first wireless network and wherein the application registration request (315) is transmitted to the central authentication server (160) over a data plane associated with the first wireless network.

5. The method (200) as claimed in claim 1, registration entity includes a first set of one or more device identifiers used for verifying the registration request (315) from the user device (110).

6. The method (200) as claimed in claim 1, wherein registration entity is the central authentication server (160) and the method (200) further includes registering with the network management device (150) using the received at least network key, subsequent to receiving the network identifier and at least one network key from the registration entity.

7. The method (200) as claimed in claim 1, wherein the registration request (315) includes a public key associated with the user device (110).

8. A user device (400) connectable to one or more wireless networks, the user device (400) comprising at least one industrial application (115) capable of processing industrial data associated with at least one process in the industrial facility, wherein the user device (400) includes a device identifier associated with the user device (400) and wherein the at least one industrial application (115) includes an application identifier associated with the at least one industrial application, the user device (400) comprising:
a. a network interface (410) for transmitting and receiving data to/from one or more devices of the one or more wireless networks; and
b. one or more processors (420) connected to a memory module (430), the one or more processors (420) configured to
i. transmit a registration request (315) to a registration entity for connecting to a first wireless network;
ii. receive a network identifier and at least one network key from the registration entity;
iii. create a network session with a central authentication server (160) for authenticating the at least one industrial application (115) with the central authentication server (160), based on the at least one network key;
iv. transmit an application registration request (315) associated with the at least one industrial application (115) to the central authentication server (160) during the created network session,
wherein upon successful registration of the at least one industrial application (115), the central authentication server (160) transmits a profile associated with the at least one industrial application (115) to a network management device (150), wherein the network profile includes one or more network parameters associated the at least industrial application (115).

9. A non-transitory storage medium (430) for configuring a profile associated with a user device (110) in an industrial facility, the user device (110) connectable to one or more wireless networks, the user device (110) comprising at least one industrial application (115) capable of processing industrial data associated with at least one process in the industrial facility, wherein the user device (110) includes a device identifier associated with the user device (110) and wherein the at least one industrial application (115) includes an application identifier associated with the at least one industrial application (115), the non-transitory storage medium (430) comprising a plurality of instructions, which when executed on one or more processors (420), cause the one or more processors (420) to:
i. transmit a registration request (315) to a registration entity for connecting to a first wireless network;
ii. receive a network identifier and at least one network key from the registration entity;
iii. create a network session with a central authentication server (160) for authenticating the at least one industrial application (115) with the central authentication server (160), based on the at least one network key;
iv. transmit an application registration request (315) associated with the at least one industrial application (115) to the central authentication server (160) during the created network session,
wherein upon successful registration of the at least one industrial application (115), the central authentication server (160) transmits a profile associated with the at least one industrial application (115) to a network management device (150), wherein the network profile includes one or more network parameters associated the at least industrial application (115).
